# EUROPEAN PATENT APPLICATION

(11) **EP 2 833 521 A1**
(43) Date of publication of application: **04.02.2015**
(21) Application number: 13813796.3
(22) Date of filing: 28.06.2013
(51) Int. Cl.: H02K 3/50

(54) **STATOR**

(30) Priority: 03.07.2012 JP 2012149291
(71) Applicant: AISIN AW CO., LTD., Anjo-shi, Aichi-ken, 444-1192 (JP); TOYOTA JIDOSHA KABUSHIKI KAISHA, Toyota-shi, Aichi-ken, 471-8571 (JP)
(72) Inventor: HASHIMOTO, Shingo, Anjo-shi, Aichi-ken, 444-1192 (JP); TANAKA, Hiroyuki, Anjo-shi, Aichi-ken, 444-1192 (JP); OTA, Takanori, Anjo-shi, Aichi-ken, 444-1192 (JP); SATO, Shingo, Anjo-shi, Aichi-ken, 444-1192 (JP); KURASHIGE, Daichi, Anjo-shi, Aichi-ken, 444-1192 (JP); KAWAURA, Hirotaka, Aichi-ken, 471-8571 (JP); AKAO, Norihiko, Aichi-ken, 471-8571 (JP)
(74) Representative: Kramer Barske Schmidtchen Patentanwälte PartG mbB
(86) International application number: PCT/JP2013/067900
(87) International publication number: WO 2014/007176

(57) **Abstract**

According to one aspect of the present invention, in a stator, a bus bar portion of each coil is formed so that a longitudinal direction of a rectangular cross-section of a rectangular conductor extends perpendicularly to a direction of a central axis of the stator core, a terminal portion of the coil is formed so that the longitudinal direction of the rectangular cross-section of the rectangular conductor extends perpendicularly to the direction of the central axis of the stator core, and the bus bar portion is joined to the terminal portion of a different one of the coils.

## Description

### TECHNICAL FIELD

The present invention relates to stators for rotating electrical machines which have coils placed in a plurality of slots in a stator core.

### BACKGROUND ART

As related art of stators for rotating electrical machines (motors), Patent Document 1 discloses a stator in which adjacent coils of the same phase are connected by a connecting wire (bus bar portion) formed by extending one end of a coil wire (conductor) forming a coil.

### [Related Art Document]

### [Patent Document]

[Patent Document 1] Japanese Patent Application Publication No. 2010-110122 (JP 2010-110122 A)

### SUMMARY OF THE INVENTION

### [Problem to be Solved by the Invention]

In the stator disclosed in Patent Document 1, since the connecting wires connecting the coils are located at the highest position in the direction of the central axis of a stator core, the height in the direction of the central axis of the stator is defined by the structure of the connecting wires. However, the connecting wires are formed so that the longitudinal direction of the rectangular cross-section of the coil wire matches the direction of the central axis of the stator core. This increases the size of the stator in the direction of the central axis thereof.

The present invention was developed to solve the above problem, and it is an object of the present invention to provide a stator capable of achieving reduction in size of the stator in the direction of the central axis thereof.

### [Means for Solving the Problem]

According to one aspect of the present invention that was developed to solve the above problem, a stator including an annular stator core, and a plurality of coils mounted on the stator core and each including a winding portion formed by winding a rectangular conductor in a loop shape, a bus bar portion extended from one end in a radial direction of the stator core in the winding portion, and a terminal portion extended from the other end in the radial direction of the stator core in the winding portion is characterized in that the bus bar portion is formed so that a longitudinal direction of a rectangular cross-section of the rectangular conductor extends perpendicularly to a direction of a central axis of the stator core, the terminal portion is formed so that the longitudinal direction of the rectangular cross-section of the rectangular conductor extends perpendicularly to the direction of the central axis of the stator core, and the bus bar portion is joined to the terminal portion of a different one of the coils.

According to this aspect, since the width of the bus bar portion and the terminal portion in the direction of the central axis of the stator core can be reduced, a coil end can be reduced in height. Moreover, the joint portion of the bus bar portion and the terminal portion can be located at a lower height in the direction of the central axis of the stator core. The stator can therefore be reduced in size in the direction of the central axis thereof.

In the above aspect, it is preferable that the coils be edgewise coils, the bus bar portion be formed by bending the rectangular conductor by flatwise bending so that the longitudinal direction of the rectangular cross-section of the rectangular conductor extends perpendicularly to the direction of the central axis of the stator core, and the terminal portion be formed by bending the rectangular conductor by flatwise bending so that the longitudinal direction of the rectangular cross-section of the rectangular conductor extends perpendicularly to the direction of the central axis of the stator core.

According to this aspect, the height of the coil end can be reliably reduced in the case of using edgewise coils. Accordingly, the stator using edgewise coils can be reliably reduced in size in the direction of the central axis thereof.

In the above aspect, it is preferable that the joint portion of the bus bar portion and the terminal portion of the different one of the coils be formed to extend in the radial direction of the stator core.

According to this aspect, the bus bar portion and the terminal portion can be joined with a joining jig in the radial direction of the stator core, facilitating joining work. This improves productivity of the stator.

In the above aspect, it is preferable that the bus bar portion be formed to extend from an end of the winding portion which is an inner end in the radial direction of the stator core, and the terminal portion be formed to extend from an end of the winding portion which is an outer end in the radial direction of the stator core.

According to this aspect, the joint portion of the bus bar portion and the terminal portion can be formed at an outer position in the radial direction of the stator core. Accordingly, a rotor that is attached inward of an inner peripheral surface of the stator core does not interfere with the joint portion of the bus bar portion and the terminal portion. This improves the ease of assembly of the rotor.

In the above aspect, it is preferable that the terminal portion be formed so that a tip end thereof is located at a height closer to the stator core than the bus bar portion is in the direction of the central axis of the stator core.

According to this aspect, the bus bar portion can be formed at a height as close to the stator core as possible in the direction of the central axis of the stator core. Accordingly, the height of the coil end can further be reduced, and the stator can further be reduced in size in the direction of the central axis thereof.

### [Effects of the Invention]

According to the stator of the present invention, the stator can be reduced in size in the direction of the central axis thereof.

### BRIEF DESCRIPTION OF THE DRAWINGS

[FIG. 1] FIG. 1 is a perspective view showing the appearance of a stator.
[FIG. 2] FIG. 2 is an enlarged view of a main part of FIG. 1.
[FIG. 3] FIG. 3 is a top view of the stator.
[FIG. 4] FIG. 4 is a side view of the stator.
[FIG. 5] FIG. 5 is a view (perspective view) showing a single coil.
[FIG. 6] FIG. 6 is a perspective view showing the appearance of a stator of a modification.
[FIG. 7] FIG. 7 is a view showing a single coil of the modification.

### MODES FOR CARRYING OUT THE INVENTION

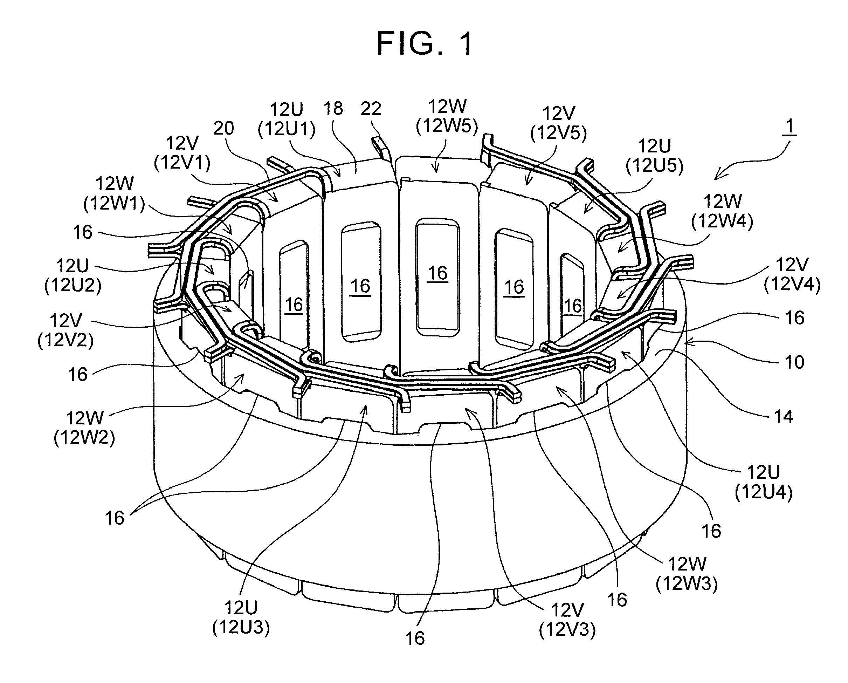

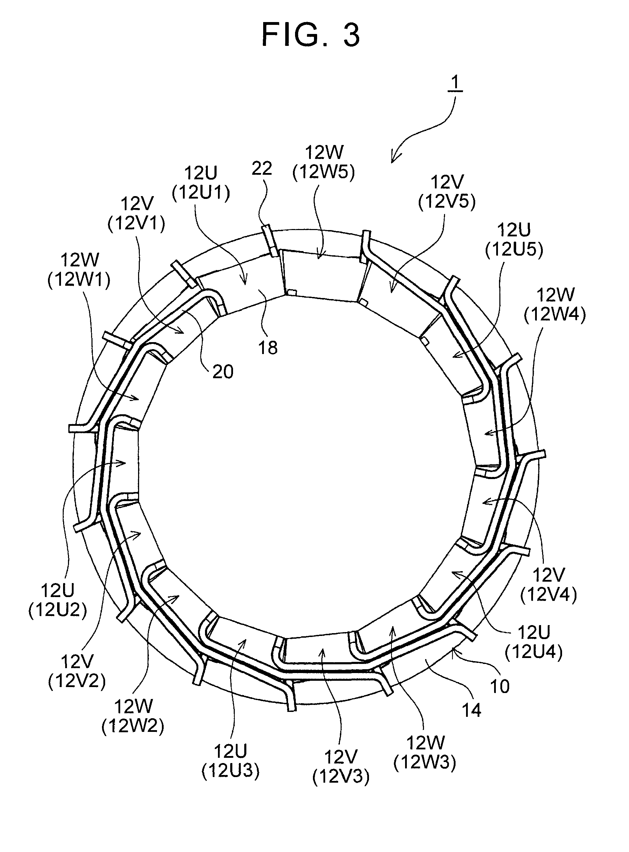

A stator 1 (stator) of an embodiment will be described. As shown in FIGS. 1 to 4, the stator 1 has a stator core 10, coils 12 (coils 12U, coils 12V, and coils 12W), etc.

The stator core 10 is formed in an annular shape, and includes a back yoke 14 and teeth 16. This stator core 10 is molded integrally in the circumferential direction thereof. The back yoke 14 is formed in an annular shape in the outer peripheral part of the stator core 10. The plurality of teeth 16 are formed so as to protrude radially inward from the inner peripheral surface of the back yoke 14. A slot (not shown) is formed between adjacent ones of the teeth 16.

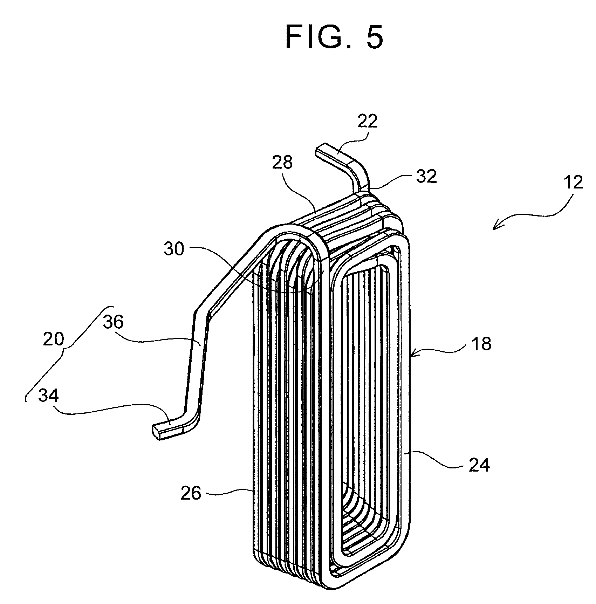

The plurality of coils 12 are mounted so as to be intensively wound around the teeth 16 of the stator core 10 via an insulator of an insulating member (not shown). A rectangular conductor forming the coil 12 has an enameled surface in order to ensure insulation between adjacent the rectangular conductors. By way of example, the coils 12 are edgewise coils in the present embodiment, as shown in FIG. 5. The "edgewise coil" is a coil shaped by winding a rectangular conductor while bending it in a short-side direction of its rectangular cross-section such that one of the short sides of the rectangular cross-section serves as an inner diameter surface and the other of the short sides of the rectangular cross-section serves as an outer diameter surface. In the example shown in FIG. 5, the coil 12 is a two-layer coil formed by winding the rectangular conductor in two layers, namely an inner layer and an outer layer. However, the present invention is not limited to this, and the coil 12 may be a single-layer coil formed by winding the rectangular conductor in a single layer or a three-layer coil formed by winding the rectangular conductors in three layers.

The coils 12 include U-phase coils 12U, V-phase coils 12V, and W-phase coils 12W. The U-phase, V-phase, and W-phase coils 12U, 12V, 12W are sequentially arranged in a repeated pattern of the U-phase coil 12U, the V-phase coil 12V, and the W-phase coil 12W in the circumferential direction of the stator core 10. The U-phase, V-phase, and W-phase coils 12U, 12V, 12W are mounted on the teeth 16 of the stator core 10 so that the coils 12 of the same phase are arranged at intervals. Adjacent ones of the coils 12 of the same phase (the same phase out of the U, V, and W-phases) are electrically connected to each other.

In the example shown in FIG. 1, the stator 1 includes U-phase coils 12U1, 12U2, 12U3, 12U4, 12U5, V-phase coils 12V1, 12V2, 12V3, 12V4, 12V5, and W-phase coils 12W1, 12W2, 12W3, 12W4, 12W5. These U-phase, V-phase, and W-phase coils 12U, 12V, 12W are arranged in order of the U-phase coil 12U1, the V-phase coil 12V1, the W-phase coil 12W1, the U-phase coil 12U2, the V-phase coil 12V2, the W-phase coil 12W2, ..., and the U-phase coil 12U5, the V-phase coil 12V5, the W-phase 12W5 in the circumferential direction of the stator core 10.

More specifically, as shown in FIGS. 1 to 5, the coil 12 includes a winding portion 18, a bus bar portion 20, a terminal portion 22, etc. In FIGS. 1 to 4, the winding portions 18 are shown in a simplified manner.

The winding portion 18 is a portion formed by winding a rectangular conductor in a loop shape and stacking the loops of the rectangular conductor. Specifically, the winding portion 18 includes an inner end face 24, an outer end face 26, an axial end face 28, an inner end 30, an outer end 32, etc.

The inner end face 24 is an end face facing the stacking direction of the rectangular conductors, and is placed on the inner side in the radial direction of the stator core 10 when the coils 12 are mounted on the stator core 10. The outer end face 26 is an end face facing the stacking direction of the rectangular conductors, and is placed on the outer side in the radial direction of the stator core 10 when the coils 12 are mounted on the stator core 10. The axial end face 28 is an end face facing the direction of the central axis of the stator core 10 when the coils 12 are mounted on the stator core 10, and is formed on the side on which the bus bar portion 20 and the terminal portion 22 are formed (lead side). In the case where the coil 12 is a two-layer coil or a three-layer coil, the axial end face 28 corresponds to the outer peripheral surface of the rectangular conductor in the outermost layer in a lead-side coil end.

The inner end 30 is an end of the rectangular conductor forming the winding portion 18, and is placed on the inner side in the radial direction of the stator core 10 when the coils 12 are mounted on the stator core 10. The outer end 32 is an end of the rectangular conductor forming the winding portion 18, and is placed on the outer side in the radial direction of the stator core 10 when the coils 12 are mounted on the stator core 10.

The bus bar portion 20 is a portion formed by extending the rectangular conductor from the inner end 30 of the winding portion 18. The bus bar portion 20 electrically connects adjacent ones of the coils 12 of the same phase. In the example shown in FIG. 1, the bus bar portion 20 extends toward the outer side in the radial direction of the stator core 10 from the inner end 30 of the winding portion 18 of one U-phase coil 12U (e.g., 12U1) as it gets closer to a different one (e.g., 12U2) of the U-phase coils 12U which is located adjacent thereto, and the bus bar portion 20 connects to the terminal portion 22 of the different U-phase coil 12U. The bus bar portions 20 are similarly connected between the V-phase coils 12V and between the W-phase coils 12W.

Specifically, the bus bar portion 20 includes a joint part 34 and a connecting part 36. The joint part 34 is a part formed in the tip end of the bus bar portion 20 and joined to the terminal portion 22 of a different one of the coils 12 (the coil 12 of the same phase which is located adjacent thereto). The connecting part 36 is a part formed between the joint part 34 and the winding portion 18.

The terminal portion 22 is a portion formed by extending the rectangular conductor from the outer end 32 of the winding portion 18. The rectangular conductor has its enamel coating removed in the terminal portion 22. The terminal portion 22 is joined to the joint part 34 of the bus bar portion 20 in a different one of the coils 12 of the same phase which is located adjacent thereto.

Although not shown in the figures, a neutral point of the stator 1 is formed by connecting the inner end 30 of the U-phase coil 12U5, the inner end 30 of the V-phase coil 12V5, and the inner end 30 of the W-phase coil 12W5. Respective external wires (not shown) are connected to the terminal portion 22 of the U-phase coil 12U1, the terminal portion 22 of the V-phase coil 12V1, and the terminal portion 22 of the W-phase coil 12W1.

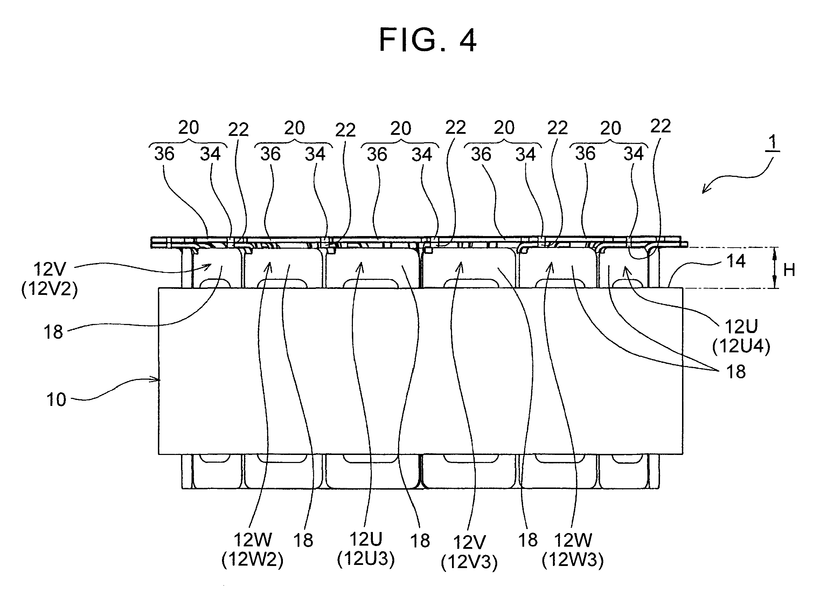

In the present embodiment, as shown in FIGS. 4 and 5, the terminal portion 22 is tilted so as to extend perpendicularly to the direction of the central axis of the stator core 10. That is, the direction of the central axis of the terminal portion 22 does not match the direction of the central axis of the stator core 10, and is perpendicular to the direction of the central axis of the stator core 10. As used herein, the term "perpendicular" does not necessarily mean the angle of 90°, and may mean angles slightly different from 90° (e.g., angles in the range of "90° ± 10°").

As shown in FIGS. 1 to 4, the bus bar portion 20 is formed by bending the rectangular conductor at the inner end 30 of the winding portion 18 outward in the radial direction of the stator core 10 by flatwise bending. The terminal portion 22 is formed by bending the rectangular conductor at the outer end 32 of the winding portion 18 outward in the radial direction of the stator core 10 by flatwise bending. As used herein, the term "flatwise bending" means to bend a rectangular conductor in a long-side direction of its rectangular cross-section such that one of the long sides of the rectangular cross-section serves as an inner peripheral surface and the other of the long sides of the rectangular cross-section serves as an outer peripheral surface. The present embodiment thus uses a structure in which the longitudinal direction of the rectangular cross-section of the rectangular conductor of the bus bar portion 20 and the terminal portion 22 is perpendicular to the direction of the central axis of the stator core 10. FIG. 5 is a view (perspective view) showing a single coil 12.

As shown in FIG. 4, the terminal portion 22 is formed at a position closer to the stator core 10 than the bus bar portion 20 in the direction of the central axis of the stator core 10. The connecting part 36 of the bus bar portion 20 is formed so as to extend above (above in FIG. 4) the axial end faces 28 of the winding portions 18 with clearance between the connecting part 36 and the axial end faces 28 of the winding portions 18.

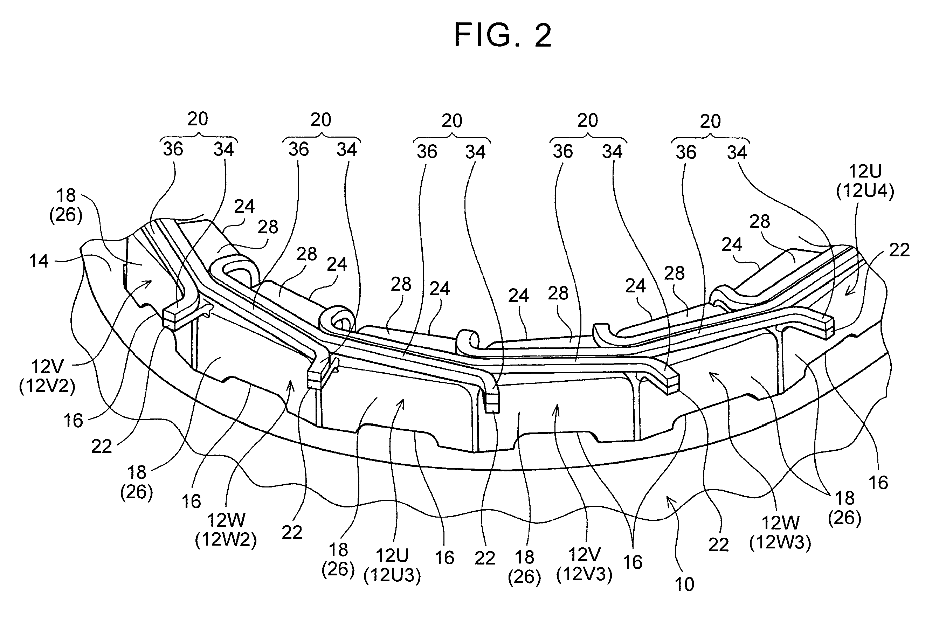

As shown in FIGS. 1 to 4, the joint part 34 of the bus bar portion 20 and the terminal portion 22 of a different one of the coils 12 are both formed to extend outward in the radial direction of the stator core 10, and are placed on each other in the direction of the central axis of the stator core 10. The joint portion of the joint part 34 of the bus bar portion 20 and the terminal portion 22 of the different one of the coils 12 is thus formed to extend outward in the radial direction of the stator core 10. For example, as shown in FIG. 2, the joint portion of the joint part 34 of the bus bar portion 20 of the W-phase coil 12W2 and the terminal portion 22 of the W-phase coil 12W3 is formed to extend outward in the radial direction of the stator core 10.

The stator 1 having such a structure is manufactured by mounting a plurality of coils 12, each having the bus bar portion 20 and the terminal portion 22 formed into desired shapes as shown in FIG. 5 in advance with a forming die, on the teeth 16 via the insulator from inward of the inner peripheral surface of the stator core 10 and inserting the coils 12 in the slots. At this time, the coils 12 can be mounted on the stator core 10 by causing the terminal portion 22 of the coil 12 to pass under the bus bar portion 20 of a different one of the coils 12 which is located adjacent thereto. For example, the coils 12 can be mounted on the stator core 10 by causing the terminal portions 22 of the V-phase coil 12V1 and the W-phase coil 12W1 to pass under the bus bar portion 20 of the U-phase coil 12U1 and inserting the V-phase coil 12V1 and the W-phase coil 12W1 into the slots of the stator core 10.

The stator 1 of the present embodiment described above has the following advantageous effects. In the stator 1, the bus bar portion 20 is formed so that the longitudinal direction of the rectangular cross-section of the rectangular conductor extends perpendicularly to the direction of the central axis of the stator core 10, and the terminal portion 22 is formed so that the longitudinal direction of the rectangular cross-section of the rectangular conductor extends perpendicularly to the direction of the central axis of the stator core 10. The bus bar portion 20 is placed so as to extend across the coil end portion from the inner diameter side toward the outer diameter side of the stator core 10, and is joined to the terminal portion 22 of a different one of the coils 12. The bus bar portion 20 and the terminal portion 22 are thus placed transversely to the direction of the central axis of the stator core 10. This can reduce the width of the bus bar portion 20 and the terminal portion 22 in the direction of the central axis of the stator core 10, and therefore can reduce the height H (see FIG. 4) of the coil end. Moreover, the joint portion of the bus bar portion 20 and the terminal portion 22 can be located at a lower height in the direction of the central axis of the stator core 10. Accordingly, the stator 1 can be reduced in size in the direction of the central axis thereof (vertical direction in FIG. 4).

The stator 1 uses edgewise coils as the coils 12. The bus bar portion 20 is formed by bending the rectangular conductor at the inner end 30 of the winding portion 18 by flatwise bending so that the longitudinal direction of the rectangular cross-section of the rectangular conductor extends perpendicularly to the direction of the central axis of the stator core 10. Moreover, the terminal portion 22 is formed by bending the rectangular conductor at the outer end 32 of the winding portion 18 by flatwise bending so that the longitudinal direction of the rectangular cross-section of the rectangular conductor extends perpendicularly to the direction of the central axis of the stator core 10. The height H of the coil end can thus be reliably reduced in the case of using edgewise coils as the coils 12. Accordingly, the stator 1 using edgewise coils can be reliably reduced in size in the direction of the central axis thereof.

The joint portion of the joint part 34 of the bus bar portion 20 and the terminal portion 22 of a different one of the coils 12 are formed so as to extend outward in the radial direction of the stator core 10. The joint part 34 of the bus bar portion 20 and the terminal portion 22 can thus be joined with a joining jig (not shown) from the outside in the radial direction of the stator core 10, facilitating joining work. This improves productivity of the stator 1.

The bus bar portion 20 is formed by extending the rectangular conductor from the inner end 30 of the winding portion 18 which is the end located on the inner side in the radial direction of the stator core 10, and the terminal portion 22 is formed by extending the rectangular conductor from the outer end 32 of the winding portion 18 which is the end located on the outer side in the radial direction of the stator core 10. The joint portion of the bus bar portion 20 and the terminal portion 22 can thus be formed at an outer position in the radial direction of the stator core 10. Accordingly, a rotor (not shown) that is attached inward of the inner peripheral surface of the stator core 10 does not interfere with the joint portion of the bus bar portion 20 and the terminal portion 22. This improves the ease of assembly of the rotor.

In the coil 12 of any of the U, V, and W-phases, the terminal portion 22 is formed so that the tip end of the terminal portion 22 is located at a height closer to the stator core 10 than the bus bar portion 20 is in the direction of the central axis of the stator core 10. The bus bar portion 20 can therefore be formed at a height as close to the stator core 10 as possible in the direction of the central axis of the stator core 10. Accordingly, the height H of the coil end can further be reduced, and the stator 1 can further be reduced in size in the direction of the central axis thereof.

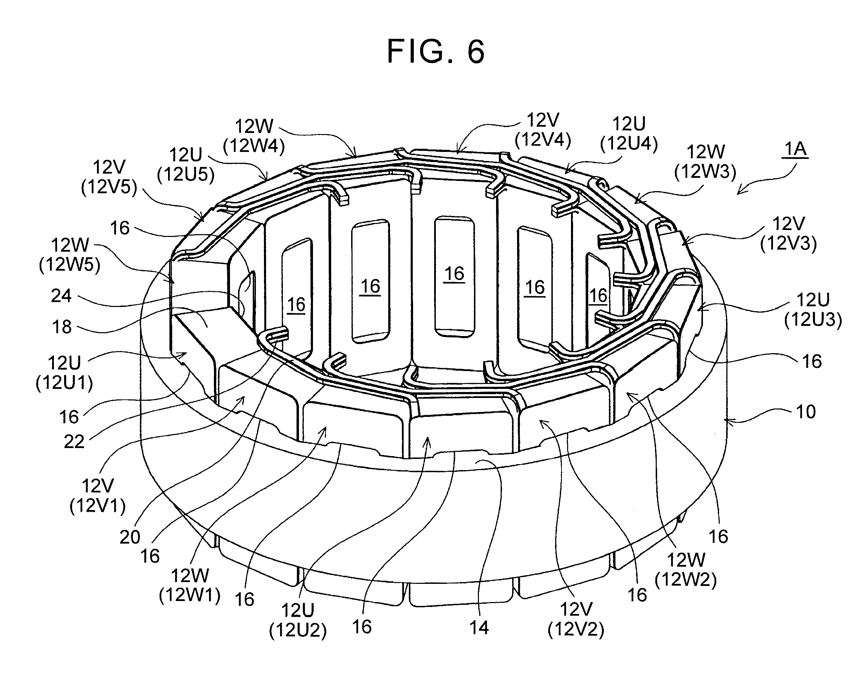

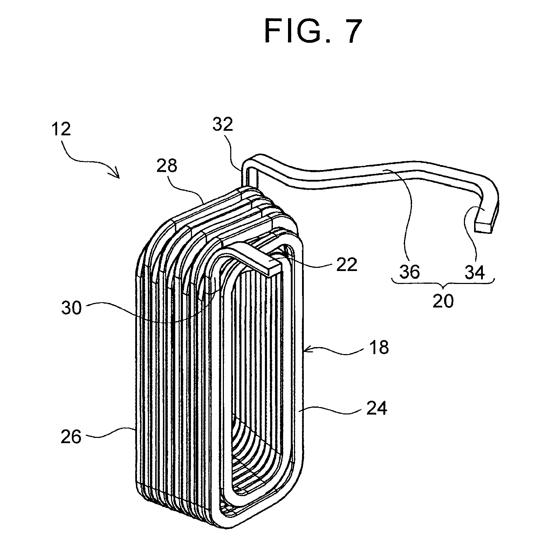

As shown in FIGS. 6 and 7, as a modification, a stator 1A may be formed in which the bus bar portion 20 is formed by extending the rectangular conductor from the outer end 32 of the winding portion 18 and the terminal portion 22 is formed by extending the rectangular conductor from the inner end 30 of the winding portion 18.

It should be understood that the above embodiment is shown by way of illustration only, and is not intended to limit the present invention in any respect. Various improvements and modifications can be made without departing from the spirit and scope of the present invention.

### [Description of the Reference Numerals]

- 1: Stator
- 10: Stator Core
- 12: Coil
- 14: Back Yoke
- 16: Tooth
- 18: Winding Portion
- 20: Bus Bar Portion
- 22: Terminal Portion
- 24: Inner End Face
- 26: Outer End Face
- 28: Axial End Face
- 30: Inner End
- 32: Outer End
- 34: Joint Part
- 36: Connecting part

## Claims

1. A stator including
an annular stator core, and
a plurality of coils mounted on the stator core and each including a winding portion formed by winding a rectangular conductor in a loop shape, a bus bar portion extended from one end in a radial direction of the stator core in the winding portion, and a terminal portion extended from the other end in the radial direction of the stator core in the winding portion, **characterized in that**
the bus bar portion is formed so that a longitudinal direction of a rectangular cross-section of the rectangular conductor extends perpendicularly to a direction of a central axis of the stator core,
the terminal portion is formed so that the longitudinal direction of the rectangular cross-section of the rectangular conductor extends perpendicularly to the direction of the central axis of the stator core, and
the bus bar portion is joined to the terminal portion of a different one of the coils.

2. The stator according to claim 1, **characterized in that**
the coils are edgewise coils,
the bus bar portion is formed by bending the rectangular conductor by flatwise bending so that the longitudinal direction of the rectangular cross-section of the rectangular conductor extends perpendicularly to the direction of the central axis of the stator core, and
the terminal portion is formed by bending the rectangular conductor by flatwise bending so that the longitudinal direction of the rectangular cross-section of the rectangular conductor extends perpendicularly to the direction of the central axis of the stator core.

3. The stator according to claim 1 or 2, **characterized in that**
the joint portion of the bus bar portion and the terminal portion of the different one of the coils is formed to extend in the radial direction of the stator core.

4. The stator according to any one of claims 1 to 3, **characterized in that**
the bus bar portion is formed to extend from an end of the winding portion which is an inner end in the radial direction of the stator core, and
the terminal portion is formed to extend from an end of the winding portion which is an outer end in the radial direction of the stator core.

5. The stator according to any one of claims 1 to 4, **characterized in that**
the terminal portion is formed so that a tip end thereof is located at a height closer to the stator core than the bus bar portion is in the direction of the central axis of the stator core.
